# EUROPEAN PATENT SPECIFICATION

(11) **EP 4 579 918 B1**
(45) Date of publication and mention of the grant of the patent: **18.03.2026**
(21) Application number: 23857743.1
(22) Date of filing: 24.08.2023
(51) Int. Cl.: H01M 50/204, H01M 50/30, H01M 50/271, H01M 50/375, H01M 50/209

(54) **BATTERY MODULE**
BATTERIEMODUL
MODULE DE BATTERIE

(30) Priority: 24.08.2022 KR 20220106032
(43) Date of publication of application: 02.07.2025
(73) Proprietor: LG Energy Solution, Ltd., Seoul 07335 (KR)
(72) Inventor: LEE, Junghoon, Daejeon 34122 (KR); JUNG, Hyemi, Daejeon 34122 (KR)
(74) Representative: Plasseraud IP
(86) International application number: PCT/KR2023/012546
(87) International publication number: WO 2024/043711

(56) References cited:
- CN-U- 211 357 526
- CN-U- 212 112 736
- KR-A- 20210 077 278
- KR-A- 20220 105 027
- KR-A- 20220 106 370

## Description

### [Technical Field]

The present invention relates to a battery module capable of improving the discharge performance of heat energy, suppressing an increase in inner pressure, and reducing the possibility of ignition.

### [Background Art]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic secondary batteries and pouch-shaped secondary batteries that can be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The battery module of a secondary battery has a plurality of pouch cells accommodated in a housing. A pouch cell is manufactured by accommodating an electrode laminate inside a pouch and sealing the pouch. An electrode lead is connected to the electrode laminate, and the electrode lead protrudes to the outside of the pouch. A plurality of bus bars are installed on the front side and the rear side of the housing, and two or more electrode leads are welded to each bus bar. The plurality of bus bars are arranged in-line on the front side and the rear side of the housing.

A plurality of battery modules may be installed in a vehicle or in a large equipment. Since a plurality of pouch cells are accommodated in the housing of the battery module, overheating or ignition of one pouch cell may cause other pouch cells inside the housing to ignite or explode in succession when. An insulating material may be interposed between the pouch cells to delay or prevent ignition or explosion of the battery module. Additionally, various cooling structures may be employed to suppress overheating of the pouch cell.

Conventional battery modules are manufactured in a structure that is surrounded by a housing that is almost sealed. Accordingly, overheating or ignition of some of the pouch cells accommodated in the housing overheat may rapidly accelerate the ignition or the explosion of the battery module due to the difficulty in the discharge of heat energy. Additionally, rapid increase in the inner pressure of the housing may relatively accelerate the explosion of the battery module.

The battery module disclosed in Korean Patent Application Publication No. 2020-0030964 (published on March 23, 2020, titled "battery module including heat-shrinkable tube") includes a heat-shrinkable tube that serves as a module housing and a heat sink, thereby improving cooling efficiency. However, since this battery module also has a structure in which the housing seals the battery module, there may be limitations in delaying overheating or ignition of the pouch cell inside the housing.

### [Disclosure]

### [Technical Problem]

In order to solve the above-described problems, it is an object of the present invention to provide a battery module that may improve the discharge performance of heat energy.

It is an object of the present invention to provide a battery module that may suppress inner pressure from increasing.

It is an object of the present invention to provide a battery module that may reduce the possibility of ignition.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [Technical Solution]

In order to solve the above-described problems, the present invention provides a battery module according to claims 1 and 16. The battery module after the invention may present one or more features of dependent claims 2 to 15.

### [Advantageous Effects]

According to the present invention, when the inner temperature or the inner pressure of the housing is equal to or higher than a preset temperature or a preset pressure, the contractile force of the elastic member increases to be greater than the rigidity of the stopper. Accordingly, as the stopper loses the support capability for the top cover, the elastic member may move the top cover to open the vent hole portion.

According to the present invention, as the top cover moves to open the vent hole portion by the elastic force of the elastic member, it is possible to delay an increase in temperature or pressure due to overheating or ignition of the battery cell.

According to the present invention, as the vent hole portion is opened at the ignition of the battery cell, heat energy or flame inside the housing may be rapidly discharged to the outside.

According to the present invention, a rapid increase in temperature or pressure inside the housing may be suppressed, and the explosion of the battery module may be delayed.

In addition to the advantageous effects described above, specific effects of the present invention will be described further while describing specific details of the present invention.

### [Description of Drawings]

FIG. 1 is a perspective view schematically illustrating a first embodiment of a battery module according to the present invention.
FIG. 2 is a cross-sectional view schematically illustrating the battery module of FIG. 1.
FIG. 3 is a perspective view schematically illustrating a state in which a top cover of the battery module of FIG. 1 is moved to open the vent hole portion.
FIG. 4 is a cross-sectional view schematically illustrating a state in which the top cover of the battery module of FIG. 1 is moved to open the vent hole portion.
FIG. 5 is a cross-sectional view schematically illustrating a second embodiment of a battery module according to the present invention.
FIG. 6 is a perspective view schematically illustrating a third embodiment of a battery module according to the present invention.
FIG. 7 is a cross-sectional view schematically illustrating the third embodiment of the battery module of FIG. 6.

### [Description of Reference Numerals]

100: battery module; 110: battery cell; 112: electrode lead; 120: housing; 121: upper surface; 122: side surface; 123: vent hole portion; 125: support; 130: top cover; 132: fixing part; 140: elastic member; 150: stopper

### [Mode for Invention]

Hereinafter, preferred embodiments of the present invention will be described in detail with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention.

The accompanying drawings are only for facilitating understanding of the embodiments disclosed herein.

Terms used herein are only used to describe specific embodiments or examples. In addition, the expressions in singular form include expressions in plural form unless the context clearly dictates otherwise. Herein, terms such as "comprise" are intended to designate that features, numbers, steps, operations, components, parts, or combinations thereof described in the specification exist. That is, it should be understood that terms such as "comprise" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected to" or "in contact with" another element, the element may be directly connected to another element, or there may exist an interposing element therebetween. On the other hand, when an element is referred to as being "directly connected to" or "in direct contact with" another element, it should be understood that there is no interposing element therebetween.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a first embodiment of a battery module according to the present invention will be described.

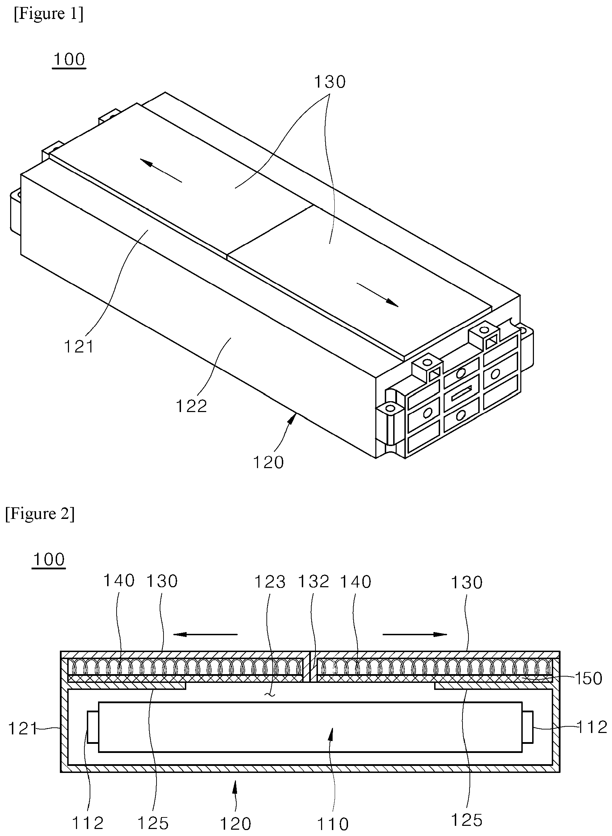

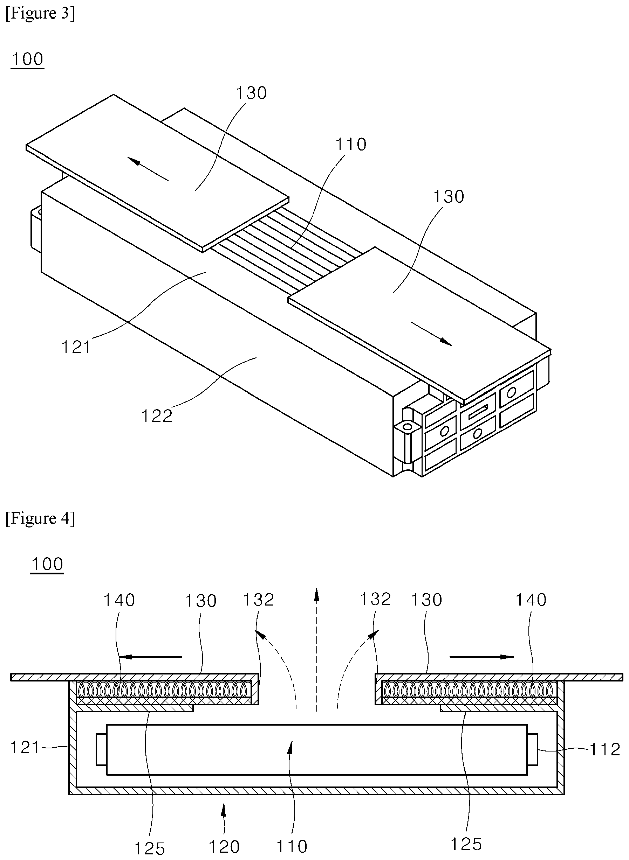

FIG. 1 is a perspective view schematically illustrating a first embodiment of a battery module according to the present invention, FIG. 2 is a cross-sectional view schematically illustrating the battery module of FIG. 1, FIG. 3 is a perspective view schematically illustrating a state in which a top cover of the battery module of FIG. 1 is moved to open the vent hole portion, and FIG. 4 is a cross-sectional view schematically illustrating a state in which the top cover of the battery module of FIG. 1 is moved to open the vent hole portion.

Referring to FIGS. 1 to 4, a battery module 100 according to the first embodiment of the present invention includes a housing 120, a top cover 130, an elastic member 140 and a stopper 150.

The housing 120A accommodates a plurality of battery cells 110 therein. In the housing 120, a vent hole portion 123 connecting an inner space and an outer space of the housing 120 is provided. The housing 120 may be made of a non-conductive synthetic resin material. The housing 120 may have a rectangular parallelepiped shape. FIG. 2 is a cross-sectional view of the battery module 100 taken along the lengthwise direction thereof.

The housing 120 may include a metal material or a composite material.

The vent hole portion 123 may be provided in the housing 120 in various shapes such as a rectangular shape, a long hole shape and a round shape. The size of the vent hole portion 123 may vary depending on the size of the housing 120, the capacity of the battery module 100, etc. In the drawing, whilst the vent hole portion 123 is shown as a single large hole to facilitate understanding, the vent hole portion 123 may have a form in which a plurality of spaced apart holes in a grating or matrix arrangement.

The battery cells 110 may have a structure in which an electrode laminate (not shown) is accommodated inside a pouch (not shown). For example, an electrode laminate may be manufactured by sequentially stacking a cathode, a separator, an anode and a separator. Additionally, an electrolyte is accommodated inside the battery cell 110. a plurality of electrode leads 112 protrude from both sides of the plurality of battery cells 110, and the plurality of electrode leads 112 are connected to a bus bar (not shown). The arrangement of the electrode leads 112 and the bus bar is not limited thereto. For example, a pair of electrode leads 112 may both protrude from one side of the battery cell 110, and a bus bar may be provided on one side of the battery module 100 correspondingly.

The plurality of battery cells 110 may be arranged in-line with a slight spacing therebetween.

An elastic panel (not shown) may be interposed between the plurality of battery cells 110. Accordingly, even when swelling of the battery cells 110 occurs, the elastic panel is compressed complementary to the swelling and may absorb the expansion of the battery cells 110 due to the swelling.

An insulation panel (not shown) may be interposed between the plurality of battery cells 110. The insulation panel serves to block heat transfer to neighboring battery cells 110 and delay ignition time. One or two or more battery cells 110 may be placed between two neighboring insulation panels to constitute one bank.

An insulating cover (not shown) may be installed to cover an outer side surface 122 of the battery cell 110. Insulating panels or insulating covers may be made of polyimide film. The insulating cover may be installed to surround each battery cell 110, to surround each bank, or to surround the entirety of the stacked battery cells 110.

The top cover 130 is movably installed on the housing 120 to open and close the vent hole portion 123. The top cover 130 is larger than the vent hole portion 123 so as to completely cover the vent hole portion 123. The top cover 130 may have a shape of a square plate or a shape covering an upper surface 121 and a portion of a side surface 122 of the housing 120. The top cover 130 may be made of a non-conductive synthetic resin material. This top cover 130 may have various shapes as long as it covers the vent hole portion 123.

A separate sealing member (not shown) may be installed between the top cover 130 and the housing 120 to seal the inside of the housing 120.

The elastic member 140 is installed to apply elastic force to the top cover 130 in a direction that causes the top cover 130 to open the vent hole portion 123. Accordingly, the direction of the elastic member 140 may vary depending on the direction in which the top cover 130 is opened.

A coil spring capable of expansion and contraction in a lengthwise direction may be employed as the elastic member 140. However, it is apparent that the elastic member 140 does not necessarily have to be a coil spring.

The stopper 150 supports the top cover 130 such that the top cover 130 maintains the vent hole portion 123 closed, and loses the support for the top cover 130 as temperature or pressure changes.

For example, the rigidity of the stopper 150 may decrease or the melting of the stopper 150 may start, thereby losing the support for the top cover 130 when a critical temperature is exceeded. The critical temperature may be, for example, 150 to 300 degrees Celsius.

For example, the stopper 150 may be deformed and lose its support capability for the top cover 130 when the inner pressure of the housing 120 exceeds the critical pressure. To this end, the stopper 150 may have a thin and wide structure such that sufficient rigidity in the direction of support for the top cover 130 is obtained whilst relatively easily deformable by pressure. For example, as the inner pressure of the housing 120 increases, the stopper 150 is deformed, and thus the buckling resistance of the stopper 150 to the elastic force of the elastic member 140 may be lowered. The critical temperature may be, for example, twice the atmospheric pressure.

One end of the stopper 150 is fixed to the top cover 130, and the other end of the stopper 150 is fixed to the housing 120. The stopper 150 of the embodiment has a rigidity greater than the elastic force of the elastic member 140 when the temperature is lower than a preset temperature and the pressure is lower than a preset pressure. On the other hand, when the temperature is higher than a preset temperature and the pressure is higher than a preset pressure, the stopper 150 has a rigidity less than the elastic force of the elastic member 140 such that the stopper 150 is deformed. The temperature or the pressure at which the stopper 150 loses its support capability for the top cover 130 may vary depending on the material, thickness and shape of the stopper 150.

The elastic coefficient of the elastic member 140 may be selected based on the temperature or the pressure at which the stopper 150 loses its support capability.

A portion of the stopper 150 is supported by a support 125 that constitutes a part of the housing 120. The support 125 supports the lower surface of the stopper 150 and prevents the stopper 150 from sagging. Additionally, the support 125 may minimize the vibration of the elastic member 140 generated due to external force when the vehicle is in motion.

As described above, when the inner temperature or the inner pressure of the housing 120 is equal to or greater than the preset temperature or the preset pressure, the contractile force of the elastic member 140 increases to be greater than the rigidity of the stopper 150. At this time, the top cover is moved by the elastic force of the elastic member 140 to open the vent hole portion 123. Thus, the heat energy or flame inside the housing 120 rapidly discharged to the outside as the vent hole portion 123 is opened when the temperature or the pressure increases due to the battery cell 110 overheating or igniting inside the housing 120. Additionally, a rapid increase in temperature or pressure inside the housing 120 may be suppressed, and the explosion time of the battery module 100 may be extended.

The vent hole portion 123 is provided on the upper surface 121 or side surface 122 of housing 120, and the top cover 130 is slideably installed on the upper surface 121 or the side surface 122 of housing 120. The vent hole portion 123 and top cover 130 may also be provided on the lower surface of the housing 120. The location of the vent hole portion 123 and top cover 130 may be appropriately changed considering the possibility of injury to the driver when heat energy or flame is discharged. The location of the vent hole portion 123 and the top cover 130 may be appropriately designed considering the possibility of damage to the vehicle, the installation location of the battery module 100, etc.

The stopper 150 may be made of a material that thermally decomposes at a temperature equal to or greater than a preset temperature such that the rigidity thereof is reduced. For example, on average, a lithium polymer battery module 100 explodes approximately at 170°C, and a lithium-ion battery module 100 explodes approximately at 187°C. Polyvinyl resin, polypropylene resin and polyethylene resin undergo thermal changes at a temperature significantly lower than the above explosion temperature. Therefore, polyvinyl resin, polypropylene resin, polyethylene resin, etc. may be used as the material of the stopper 150. Additionally, the elastic coefficient of the elastic member 140 may be selected based on the rigidity that decreases at the thermal decomposition temperature of the stopper 150.

In Addition, the stopper 150 may be made of a material that melts at a temperature equal to or higher than a preset temperature, thereby reducing rigidity thereof. Even when the stopper 150 melts at a temperature equal to or higher than the preset temperature, the elastic member 140 may move the top cover 130. Therefore, it is sufficient that the material of the stopper 150 melts at a temperature equal to or higher than a preset temperature, and it is not necessary for the material of the stopper 150 to be a synthetic resin material.

The elastic force applied to the top cover 130 by the elastic member 140 decreases as the top cover 130 is opened. That is, when the top cover 130 closes the vent hole portion 123, the elastic member 140 is stretched to the maximum length thereof where the elastic force of the elastic member 140 is at its maximum. On the other hand, the elastic force of the elastic member 140 gradually decreases when the length of the elastic member 140 gradually shortened as the top cover 130 is opened.

The stopper 150 supports the top cover 130 to prevent the elastic member 140 from shrinking with the elastic member 140 in an elongated state at the top cover 130 and the housing 120 when the inner temperature or the inner pressure of the housing 120 is lower than the preset temperature or the preset pressure. However, the stopper 150 contracts or deforms, causing the elastic member 140 to contract and move the top cover 130 when the inner temperature or the inner pressure of the housing 120 is equal to or higher than the preset temperature or the preset pressure.

The top cover 130 is installed in pair to slide to opposite sides along the lengthwise direction of the housing 120. The elastic member 140 is also installed in pair to apply elastic force to the top covers 130 in pair, respective. In addition, the elastic member 140 is installed to support the top cover 130 between each top cover 130 and the stopper 150. Accordingly, the vent hole portion 123 provided in the housing 120 may be made larger. Additionally, this structure may be applied as the size of the battery module 100 increases.

In the drawing, the size of the top cover 130 is somewhat exaggerated to facilitate understanding. In the drawing, whilst the top cover 130 is shown to protrude more laterally and outward than the battery module 100 when the top cover 130 is open, the embodiment may vary depending on the installation environment of the battery module 100. For example, it is apparent that the top cover 130 may not protrude further outward than the battery module 100 when the top cover 130 is open.

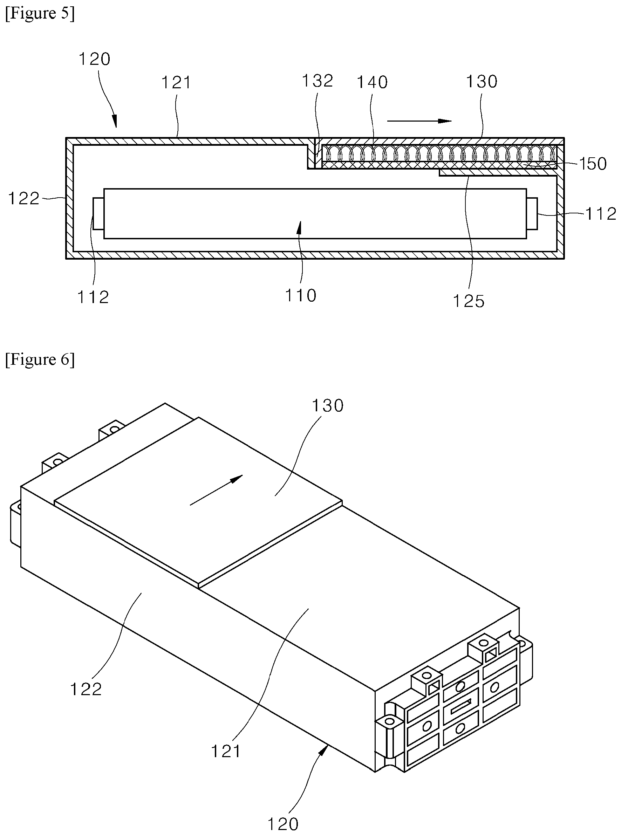

FIG. 5 is a cross-sectional view schematically illustrating a second embodiment of a battery module according to the present invention.

Since the second embodiment is substantially the same as the first embodiment except for the configuration in which only one top cover is installed, the same reference numerals will be assigned to the same component and the descriptions thereof will be omitted.

Referring to FIG. 5, the top cover 130 is installed to be movable along the lengthwise direction of the housing 120, and the elastic member 140 may be arranged in parallel with the lengthwise direction of the housing 120.

The elastic member 140 is installed between the top cover 130 and the stopper 150 to support the top cover 130.

The battery module 100 of such structure may be applied to a structure where one side of the battery module 100 is block by surrounding structures thereof in the lengthwise direction of the housing 120, or where the top cover 130 may be opened only in one direction. Additionally, the battery module 100 may be applied when the vent hole portion 123 is small.

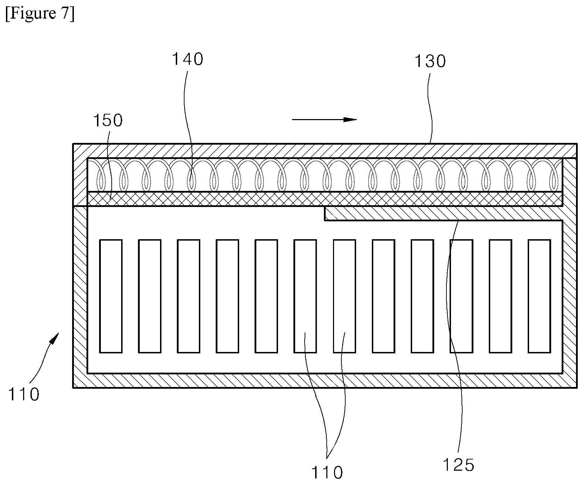

FIG. 6 is a perspective view schematically illustrating a third embodiment of a battery module according to the present invention, and FIG. 7 is a cross-sectional view schematically illustrating the third embodiment of the battery module of FIG. 6.

Since the third embodiment is substantially the same as the first embodiment except for the configuration in which the top cover is moved in the widthwise direction of the housing, the same reference numerals will be assigned to the same component and the descriptions thereof will be omitted.

Referring to FIGS. 6 and 7, the top cover 130 is installed to be movable along the widthwise direction of the housing 120, and the elastic member 140 is arranged in parallel with the widthwise direction of the housing 120. Here, two top covers 130 or one top cover 130 may be installed to be movable along the widthwise direction of the housing. The battery module 100 of such structure may be applied to a structure where one side of the battery module 100 is block by surrounding structures thereof in the widthwise direction of the housing 120, or where the top cover 130 may be opened only in one direction. Additionally, the battery module 100 may be applied when the vent hole portion 123 is small.

The battery module 100 of this structure may be applied to a structure in which the surrounding structure of the battery module 100 blocks one widthwise direction of the housing 120 or the top cover 130 may be opened in only one direction. Additionally, the battery module 100 may be applied to a form in which the vent hole portion 123 is small in size.

## Claims

1. A battery module (100) comprising:
a housing (120) accommodating a plurality of battery cells (110) therein and provided with a vent hole portion (123);
a top cover (130) movably installed on the housing to open and close the vent hole portion;
**characterized in that** the battery module further comprises:
an elastic member (140) installed to apply an elastic force to the top cover in a direction to have the vent hole portion opened by the top cover; and
a stopper (150) supporting the top cover to maintain the vent hole portion closed,
wherein a support capability of the stopper for the top cover is reduced at a temperature equal to or higher than a predetermined temperature or at a pressure equal to or higher than a predetermined pressure.

2. The battery module of claim 1, wherein the vent hole portion is provided on an upper surface (121) or on a side surface (122) of the housing, and
wherein the top cover is slidably installed on the upper surface or the side surface of the housing.

3. The battery module of claim 1, wherein the stopper includes a material thermally decomposing at the temperature equal to or higher than the predetermined temperature to reduce rigidity thereof.

4. The battery module of claim 1, wherein the stopper includes a material melting at the temperature equal to or higher than the predetermined temperature to reduce rigidity thereof.

5. The battery module of claim 1, wherein the elastic force applied to the top cover by the elastic member decreases as the top cover is opened.

6. The battery module of claim 1, wherein the elastic member is installed in an elongated state on the top cover and the housing, and
wherein the stopper supports the top cover to prevent the elastic member from shrinking.

7. The battery module of claim 1, wherein the top cover is installed in pair to slide to opposite sides along a lengthwise direction of the housing.

8. The battery module of claim 7, wherein the elastic member is installed in pair to apply the elastic force to the top cover in pair, respectively.

9. The battery module of claim 1, wherein the top cover is installed to be movable along a lengthwise direction of the housing, and wherein the elastic member is arranged in parallel with the lengthwise direction of the housing;
or wherein the top cover is installed to be movable along a widthwise direction of the housing, and wherein the elastic member is arranged in parallel with the widthwise direction of the housing.

10. The battery module of claim 1, wherein the top cover is installed to be movable at least between a first position and a second position, and
wherein an opening degree of the vent hole portion with the top cover in the second position is greater than that of the vent hole portion with the top cover in the first position.

11. The battery module of claim 10, wherein the opening degree of the vent hole portion becomes greater as the top cover moves from the first position to the second position.

12. The battery module of claim 10, wherein the top cover includes a first top cover and a second top cover, and
wherein the first top cover covers a first area of the vent hole portion when in the first position, and the second top cover covers a second area of the vent hole portion when in the first position.

13. The battery module of claim 12, wherein the first area and the second area do not overlap each other or partially overlap each other.

14. The battery module of claim 1, wherein a movement of the top cover comprises at least one of a rotational movement and a translational movement which occur individually or simultaneously.

15. The battery module of claim 1, wherein a movement of the top cover comprises a slide movement along a lengthwise direction or widthwise direction of the housing.

16. A battery module comprising:
a housing accommodating a plurality of battery cells therein and provided with a vent hole portion;
a top cover movably installed in the housing;
**characterized in that** the battery module further comprises:
an elastic member applying an elastic force to the top cover; and
a stopper resisting the elastic force to resist the top cover from moving by the elastic force,
wherein the stopper has a resistance to the elastic force, and
wherein the resistance decreases at a temperature equal to or higher than a predetermined temperature or at a pressure equal to or higher than predetermined pressure.

## Patentansprüche

1. Batteriemodul (100), umfassend:
ein Gehäuse (120), welches eine Mehrzahl von Batteriezellen (110) darin aufnimmt und mit einem Belüftungslochabschnitt (123) bereitgestellt ist;
eine obere Abdeckung (130), welche an dem Gehäuse bewegbar installiert ist, um den Belüftungslochabschnitt zu öffnen und zu schließen;
**dadurch gekennzeichnet, dass** das Batteriemodul ferner umfasst:
ein elastisches Element (140), welches installiert ist, um eine elastische Kraft auf die obere Abdeckung in einer Richtung aufzubringen, um den Belüftungslochabschnitt durch die obere Abdeckung öffnen zu lassen; und
eine Stoppeinheit (150), welche die obere Abdeckung haltert, um den Belüftungslochabschnitt geschlossen zu halten,
wobei eine Halterungsfähigkeit der Stoppeinheit für die obere Abdeckung bei einer Temperatur gleich wie oder höher als eine vorbestimmte Temperatur oder bei einem Druck gleich wie oder höher als ein vorbestimmter Druck reduziert ist.

2. Batteriemodul nach Anspruch 1, wobei der Belüftungslochabschnitt an einer oberen Fläche (121) oder einer Seitenfläche (122) des Gehäuses bereitgestellt ist, und
wobei die obere Abdeckung an der oberen Fläche oder der Seitenfläche des Gehäuses gleitbar installiert ist.

3. Batteriemodul nach Anspruch 1, wobei die Stoppeinheit ein Material umfasst, welches sich bei einer Temperatur gleich wie oder höher als die vorbestimmte Temperatur thermisch zersetzt, um die Steifheit davon zu reduzieren.

4. Batteriemodul nach Anspruch 1, wobei die Stoppeinheit ein Material umfasst, welches bei einer Temperatur gleich wie oder höher als die vorbestimmte Temperatur schmilzt, um die Steifheit davon zu reduzieren.

5. Batteriemodul nach Anspruch 1, wobei sich die elastische Kraft, welche auf die obere Abdeckung durch das elastische Element aufgebracht ist, verringert, wenn die obere Abdeckung geöffnet ist.

6. Batteriemodul nach Anspruch 1, wobei das elastische Element in einem elongierten Zustand an der oberen Abdeckung und dem Gehäuse installiert ist, und
wobei die Stoppeinheit die obere Abdeckung haltert, um das elastische Element vor einem Schrumpfen zu hindern.

7. Batteriemodul nach Anspruch 1, wobei die obere Abdeckung als Paar installiert ist, um zu entgegengesetzten Seiten entlang einer Längsrichtung des Gehäuses zu gleiten.

8. Batteriemodul nach Anspruch 7, wobei das elastische Element als Paar installiert ist, um die elastische Kraft auf die obere Abdeckung jeweils als Paar aufzubringen.

9. Batteriemodul nach Anspruch 1, wobei die obere Abdeckung installiert ist, um entlang einer Längsrichtung des Gehäuses bewegbar zu sein, und wobei das elastische Element parallel zu der Längsrichtung des Gehäuses angeordnet ist;
oder wobei die obere Abdeckung installiert ist, um entlang einer Breitenrichtung des Gehäuses bewegbar zu sein, und wobei das elastische Element parallel zu der Breitenrichtung des Gehäuses angeordnet ist.

10. Batteriemodul nach Anspruch 1, wobei die obere Abdeckung installiert ist, um wenigstens zwischen einer ersten Position und einer zweiten Position bewegbar zu sein, und
wobei ein Öffnungsgrad des Belüftungslochabschnitts mit der oberen Abdeckung in der zweiten Position größer ist als der des Belüftungslochabschnitts mit der oberen Abdeckung in der ersten Position.

11. Batteriemodul nach Anspruch 10, wobei der Öffnungsgrad des Belüftungslochabschnitts größer wird, wenn sich die obere Abdeckung von der ersten Position zu der zweiten Position bewegt.

12. Batteriemodul nach Anspruch 10, wobei die obere Abdeckung eine erste obere Abdeckung und eine zweite obere Abdeckung umfasst, und
wobei die erste obere Abdeckung in der ersten Position einen ersten Bereich des Belüftungslochabschnitts abdeckt und die zweite obere Abdeckung in der ersten Position einen zweiten Bereich des Belüftungslochabschnitts abdeckt.

13. Batteriemodul nach Anspruch 12, wobei der erste Bereich und der zweite Bereich sich nicht gegenseitig überlappen oder sich teilweise gegenseitig überlappen.

14. Batteriemodul nach Anspruch 1, wobei eine Bewegung der oberen Abdeckung wenigstens eines aus einer Rotationsbewegung und einer Translationsbewegung umfasst, welche individuell oder simultan stattfinden.

15. Batteriemodul nach Anspruch 1, wobei eine Bewegung der oberen Abdeckung eine Gleitbewegung entlang einer Längsrichtung oder einer Breitenrichtung des Gehäuses umfasst.

16. Batteriemodul, umfassend:
ein Gehäuse, welches eine Mehrzahl von Batteriezellen darin aufnimmt und mit einem Belüftungslochabschnitt bereitgestellt ist;
eine obere Abdeckung, welche in dem Gehäuse bewegbar installiert ist;
**dadurch gekennzeichnet, dass** das Batteriemodul ferner umfasst:
ein elastisches Element, welches eine elastische Kraft auf die obere Abdeckung aufbringt; und
eine Stoppeinheit, welche der elastischen Kraft standhält, damit die obere Abdeckung einem Bewegen durch die elastische Kraft standhält,
wobei die Stoppeinheit einen Widerstand zu der elastischen Kraft aufweist, und
wobei sich die Standhaltekraft bei einer Temperatur gleich wie oder höher als eine vorbestimmte Temperatur oder bei einem Druck gleich wie oder höher als ein vorbestimmter Druck reduziert.

## Revendications

1. Module de batterie (100) comprenant :
un boîtier (120) accueillant une pluralité d'éléments de batterie (110) à l'intérieur et doté d'une partie orifice d'aération (123) ;
un couvercle de sommet (130) installé de manière mobile sur le boîtier pour ouvrir et fermer la partie orifice d'aération ;
**caractérisé en ce que** le module de batterie comprend en outre :
un organe élastique (140) installé pour appliquer une force élastique sur le couvercle supérieur dans une direction pour avoir la partie orifice d'aération ouverte par le couvercle de sommet ; et
une butée (150) supportant le couvercle supérieur pour maintenir la partie orifice d'aération fermée,
dans lequel une capacité de support de la butée pour le couvercle de sommet est réduite à une température égale ou supérieure à une température prédéterminée ou à une pression égale ou supérieure à une pression prédéterminée.

2. Module de batterie selon la revendication 1, dans lequel la partie orifice d'aération est agencée sur une surface supérieure (121) ou sur une surface latérale (122) du boîtier, et
dans lequel le couvercle de sommet est installé de manière coulissante sur la surface supérieure ou la surface latérale du boîtier.

3. Module de batterie selon la revendication 1, dans lequel la butée comporte un matériau se décomposant thermiquement à la température égale ou supérieure à la température prédéterminée pour réduire sa rigidité.

4. Module de batterie selon la revendication 1, dans lequel la butée comporte un matériau fondant à la température égale ou supérieure à la température prédéterminée pour réduire sa rigidité.

5. Module de batterie selon la revendication 1, dans lequel la force élastique appliquée au couvercle de sommet par l'organe élastique diminue lorsque le couvercle de sommet est ouvert.

6. Module de batterie selon la revendication 1, dans lequel l'organe élastique est installé dans un état allongé sur le couvercle de sommet et le boîtier, et
dans lequel la butée supporte le couvercle de sommet pour empêcher l'organe élastique de se contracter.

7. Module de batterie selon la revendication 1, dans lequel le couvercle de sommet est installé par paire pour glisser vers des côtés opposés le long d'une direction longitudinale du boîtier.

8. Module de batterie selon la revendication 7, dans lequel l'organe élastique est installé par paire pour appliquer la force élastique au couvercle de sommet par paire, respectivement.

9. Module de batterie selon la revendication 1, dans lequel le couvercle de sommet est installé pour être mobile le long d'une direction longitudinale du boîtier, et dans lequel l'organe élastique est agencé parallèlement à la direction longitudinale du boîtier ; ou dans lequel le couvercle de sommet est installé pour être mobile le long d'une direction transversale du boîtier, et dans lequel l'organe élastique est agencé parallèlement à la direction transversale du boîtier.

10. Module de batterie selon la revendication 1, dans lequel le couvercle de sommet est installé pour être mobile au moins entre une première position et une seconde position, et
dans lequel un degré d'ouverture de la partie orifice d'aération avec le couvercle de sommet dans la seconde position est supérieur à celui de la partie orifice d'aération avec le couvercle de sommet dans la première position.

11. Module de batterie selon la revendication 10, dans lequel le degré d'ouverture de la partie orifice d'aération devient plus grand lorsque le couvercle de sommet se déplace de la première position à la seconde position.

12. Module de batterie selon la revendication 10, dans lequel le couvercle de sommet comporte un premier couvercle de sommet et un second couvercle de sommet, et dans lequel le premier couvercle de sommet recouvre une première zone de la partie orifice d'aération lorsqu'il est dans la première position, et le second couvercle de sommet recouvre une seconde zone de la partie orifice d'aération lorsqu'il est dans la première position.

13. Module de batterie selon la revendication 12, dans lequel la première zone et la seconde zone ne se chevauchent pas l'une et l'autre ou se chevauchent partiellement l'une et l'autre.

14. Module de batterie selon la revendication 1, dans lequel un mouvement du couvercle de sommet comprend au moins un parmi un mouvement de rotation et un mouvement de translation qui se produisent individuellement ou simultanément.

15. Module de batterie selon la revendication 1, dans lequel un mouvement du couvercle de sommet comprend un mouvement coulissant le long d'une direction longitudinale ou d'une direction transversale du boîtier.

16. Module de batterie comprenant :
un boîtier accueillant une pluralité d'éléments de batterie à l'intérieur et doté d'une partie orifice d'aération ;
un couvercle de sommet installé de manière mobile dans le boîtier ;
**caractérisé en ce que** le module de batterie comprend en outre :
un organe élastique appliquant une force élastique au couvercle de sommet ; et
une butée résistant à la force élastique pour empêcher le déplacement du couvercle de sommet par la force élastique,
dans lequel la butée présente une résistance à la force élastique, et
dans lequel la résistance diminue à une température égale ou supérieure à une température prédéterminée ou à une pression égale ou supérieure à une pression prédéterminée.
